# EUROPEAN PATENT SPECIFICATION

(11) **EP 0 581 981 B1**
(45) Date of publication and mention of the grant of the patent: **16.10.1996**
(21) Application number: 92113193.4
(22) Date of filing: 03.08.1992
(51) Int. Cl.: C01F 11/18

(54) **Process for producing needle-shaped calcium carbonate particles**
Verfahren zur Herstellung von nadelförmigen Calciumcarbonatteilchen
Procédé pour la production de particules de carbonate de calcium en forme d'aiguille

(43) Date of publication of application: 09.02.1994
(73) Proprietor: YABASHI INDUSTRIES CO., LTD., Ogaki-shi Gifu-ken (JP)
(72) Inventor: Inui, Saburo, Fuwa-gun, Gifu-ken (JP); Iwashita, Tetsushi, Ogaki-shi, Gifu-ken (JP); Ota, Yoshio, Ogaki-shi, Gifu-ken (JP)
(74) Representative: Liedl, Christine, Dipl.-Chem.

(56) References cited:
- DE-A- 1 939 608
- US-A- 3 197 322
- US-A- 4 824 654
- CHEMICAL ABSTRACTS, vol. 110, no. 10, 6 March 1989, Columbus, Ohio, US; abstract no. 78673 f, K. KAMEYAMA ET AL. 'Synthesis and properties of needle-like aragonite.' page 186 ;

## Description

### BACKGROUND OF THE INVENTION

### I. Field of the Invention

This invention relates to a process for producing needle-shaped calcium carbonate particles which are widely used as fillers and reinforcing agents in various fields.

### II. Description of the Related Art

Calcium carbonate is largely grouped into heavy calcium carbonate produced by mechanically pulverizing limestone and synthetic calcium carbonate which is chemically synthesized. The heavy calcium carbonate is obtained as particles with irregular shapes and their particle size is controlled by pulverization and/or classification so as to obtain the calcium carbonate particles with the desired particle size.

Process for synthesizing calcium carbonate include "liquid-liquid" process and "liquid-gas" process.

A representative example of the "liquid-gas" process is carried out by blowing carbon dioxide gas into a calcium hydroxide slurry. In this process, by controlling the concentration of the calcium hydroxide slurry, reaction temperature and reaction method, and by selecting the types of additives which may or may not be added, calcium carbonate particles with various particle sizes and shapes may be obtained.

The present inventors reported a process for producing needle-shaped calcium carbonate particles with a longer diameter of 5 - 100 µm and shorter diameter of 0.2 - 5 µm by a "liquid-gas" process comprising pouring aqueous calcium hydroxide solution to water into which carbon dioxide gas is blown (Japanese Laid-open Patent Application (Kokai) No. 62-278123). However, the production efficiency of this conventional process is not satisfactorily high.

On the other hand, the "liquid-liquid" process is a process in which a solution containing carbonate ion (such as aqueous sodium carbonate solution and aqueous ammonium carbonate solution) and a solution containing a calcium compound (such as aqueous calcium chloride solution and aqueous calcium acetate solution) are reacted so as to produce calcium carbonate particles. A "liquid-liquid" process by which calcium carbonate crystals with shorter diameters of 2 - 3 µm and longer diameters of 30 - 60 µm is disclosed in Japanese Laid-open Patent Application (Kokai) No. 59-203728.

DE-A-1 939 608 discloses a method for the preparation of needle-shaped aragonite particles by carbonation of an aqueous solution containing a soluble calcium salt like calcium chloride at a temperature of at least 70° C. No magnesium hydroxide is added.

US-A-4 824 654 teaches the preparation of calcium carbonate by carbonation of a calcium hydroxide solution at temperatures not below 60° C. Although no magnesium hydroxide is present this document discloses the possibility to increase the solubility of calcium hydroxide and improve the efficiency of the process output by addition of 'an agent'. The only example of this agent specified is sucrose. No indication is given in this document that magnesium hydroxide added as 'the agent' would have a similar result.

US-A-3 197 322 describes carbonation of aqueous solutions of a mixture of calcium chloride, magnesium hydroxide and calcium hydroxide. The molar ratio of the first two compounds at the beginning of carbonation is about 1.0. The obtained product is a calcite/aragonite mixture of a pumpable consistency (so probably not consisting of fibrous particles). Carbonation takes place at temperature below 60° C.

Accordingly, an object of the present invention is to provide a process for producing needle-shaped calcium carbonate particles with high production efficiency.

The present invention provides a process for producing needle-shaped calcium carbonate particles comprising reacting a aqueous solution including calcium chloride, magnesium hydroxide and water with carbon dioxide gas at a temperature not lower than 60°C.

By the process of the present invention, needle-shaped calcium carbonate particles may be produced with very high production efficiency which is several tens times that attained in the conventional process disclosed in Japanese Laid-open Patent Application (Kokai) No. 62-278123. Therefore, by the present invention, the price of the needle-shaped calcium carbonate particles will be largely reduced, so that their application fields such as for synthetic resin compositions, paints and inks will be largely expanded.

### BRIEF DESCRIPTION OF THE DRAWINGS

Fig.1 is a scanning electron microphotograph (SEM photograph) of Sample No. 1 of the needle-shaped calcium carbonate particles obtained in Example 1;
Fig. 2 is a SEM photograph of Sample No. 2 of the needle-shaped calcium carbonate particles obtained in Example 2;
Fig. 3 is a SEM photograph of Sample No. 3 of the needle-shaped calcium carbonate particles obtained in Example 3;
Fig. 4 is a SEM photograph of Sample No. 4 of the needle-shaped calcium carbonate particles obtained in Example 4;
Fig. 5 is a SEM photograph of Sample No. 5 of the needle-shaped calcium carbonate particles obtained in Example 5;
Fig. 6 is a SEM photograph of Sample No. 6 of the needle-shaped calcium carbonate particles obtained in Example 6;
Fig. 7 is a SEM photograph of Sample No. 7 of the needle-shaped calcium carbonate particles obtained in Example 7;
Fig. 8 is a chart showing the X-ray diffraction pattern of the Sample No. 1;
Fig. 9 is a chart showing the X-ray diffraction pattern of the Sample No. 2;
Fig. 10 is a chart showing the X-ray diffraction pattern of the Sample No. 3;
Fig. 11 is a chart showing the X-ray diffraction pattern of the Sample No. 4;
Fig. 12 is a chart showing the X-ray diffraction pattern of the Sample No. 5;
Fig. 13 is a chart showing the X-ray diffraction pattern of the Sample No. 6; and
Fig. 14 is a chart showing the X-ray diffraction pattern of the Sample No. 7.
Fig. 15 is a SEM photograph of Sample No. 8 of the needle-shaped calcium carbonate particles obtained in Example 8;
Fig. 16 is a chart showing the X-ray diffraction pattern of the Sample No. 8;
Fig. 17 is a SEM photograph of Sample No. 9 of the needle-shaped calcium carbonate particles obtained in Example 9; and
Fig. 18 is a chart showing the X-ray diffraction pattern of the Sample No. 9

### DETAILED DESCRIPTION OF THE PREFERRED EMBODIMENTS

In the process of the present invention, the reaction between the ternary system of calcium chloride/magnesium hydroxide/water and carbon dioxide gas may be carried out by, for example, any one of the following methods A, B and C.

### Method A:

To an aqueous calcium chloride solution into which carbon dioxide gas is being blown, magnesium hydroxide is added gradually or at one time.

### Method B:

To a magnesium hydroxide slurry into which carbon dioxide gas is being blown, calcium chloride is added gradually or at one time.

### Method C:

Into a mixture of calcium chloride, magnesium hydroxide and water (material liquid), carbon dioxide is blown. The material liquid can be easily prepared by 1) reacting calcium hydroxide, magnesium chloride and water, 2) reacting calcium carbonate (limestone), hydrochloric acid and magnesium hydroxide, or 3) calcium hydroxide, hydrochloric acid and magnesium hydroxide. Among these, the method 1) is best preferred because magnesium chloride is by-produced in the reaction of forming the desired calcium carbonate particles, and the by-produced magnesium chloride can be recycled as the starting material of the method 1). Needless to say, the material liquid may also be obtained by merely mixing calcium chloride, magnesium hydroxide and water.

In the process of the present invention, it is necessary to carry out the reaction while heating the aqueous solution or slurry at a temperature not lower than 60°C. If the reaction temperature is lower than 60°C, substantial amount of cubic calcite is by-produced. Further, the longer diameters of the particles are shortened and the aspect ratios are also reduced.

The carbon dioxide gas blown into the reaction system may be pure carbon dioxide gas or a mixed gas containing carbon dioxide gas.

Although the ratio of the calcium chloride to magnesium hydroxide is not restricted, about stoichiometric ratio is preferred. That is, the calcium chloride and magnesium hydroxide may be preferably used in about equimolar amount (i.e., 0.7:1.3 - 1.3:0.7 mol/mol), most preferably in equimolar amount. Although the concentrations of calcium chloride and magnesium hydroxide in water is also not restricted, it may preferably be 0.1 to 1 mol/l. Although the rate of blowing of the dioxide gas is not restricted, it may preferably be 0.02 l/min. to 1 l/min. per one liter of the reaction mixture. The reaction time varies depending on the reaction temperature, shape of the reaction vessel, manner of blowing carbon dioxide gas, manner of stirring and so on. The carbon dioxide gas is blown into the reaction mixture until the magnesium hydroxide/calcium chloride/water system is converted to calcium carbonate/magnesium chloride/water system. This conversion may be easily confirmed by measuring the pH of the reaction mixture with a pH paper (the pH of the reaction mixture is about 7.0 when the reaction is completed) and/or by analyzing the reaction product by X-ray diffraction analysis.

By the above-described reaction, needle-shaped calcium carbonate particles with longer diameters of 5 - 100 µm and shorter diameters of 0.2 - 5 µm are precipitated.

The invention will now be described by way of examples thereof. It should be noted that the examples are presented for the illustration purpose only and should not be interpreted in any restrictive way.

### Example 1

To one mole of calcium chloride and one mole of magnesium hydroxide, water was added to a volume of 2 liters. The thus obtained material liquid was heated at 80 - 85°C, and carbon dioxide gas was blown (bubbled) at a rate of 1 l/min. for 4 hours under stirring. By this operation, needle-shaped calcium carbonate particles were precipitated. The obtained particles were washed with water, collected by filtration and dried at about 100°C by an electric drier to obtain needle-shaped calcium carbonate particles of Sample No. 1.

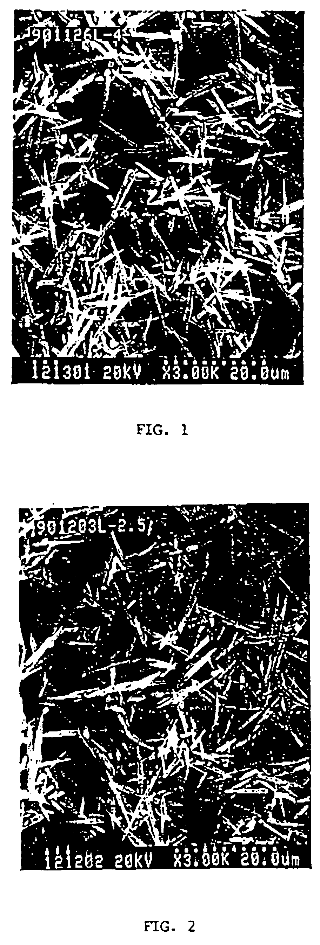

The SEM photograph of the Sample No. 1 is shown in Fig. 1. In the microphotograph, the full scale is 20 µm and a unit division is 2 µm.

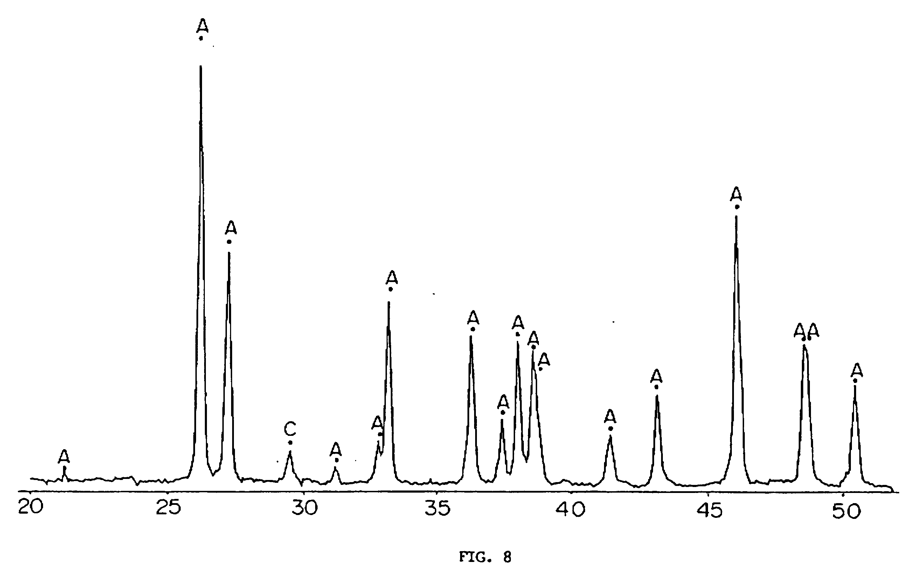

The X-ray diffraction pattern of Sample No. 1 is shown in Fig. 8. In the X-ray diffraction patterns shown in Figs. 8 - 14, the symbol "A" indicates the peaks of aragonite crystals and the symbol "C" indicates the peaks of calcite crystals.

The conditions of the X-ray diffraction analysis were as follows (these conditions were employed throughout Examples 1 - 7):
- Target:: Cu
- Filter:: Ni
- Voltage/Current:: 30 KV/15 mA
- Full Scale:: 2000 Cps
- Time Const.:: 1 sec.
- Scan. Speed:: 2°/min.
- Chart Speed:: 20 mm/min.
- Div. Slit:: 1°
- Rec. Slit:: 0.2 mm
- Scatt. Slit:: 1°

As can be seen from Fig. 1, the obtained calcium carbonate particles are mainly aragonite crystals.

### Example 2

To 2 liters of an aqueous calcium chloride solution (0.25 mol/l) at 80 - 85°C into which carbon dioxide gas was being blown (1 l/min.) under stirring, 0.5 mole of magnesium hydroxide (powder) was added at one time and the reaction was allowed to occur at the same temperature for 2.5 hours so as to precipitate of needle-shaped calcium carbonate particles. The precipitated crystals were treated as in Example 1 to obtain needle-shaped calcium carbonate particles Sample No. 2.

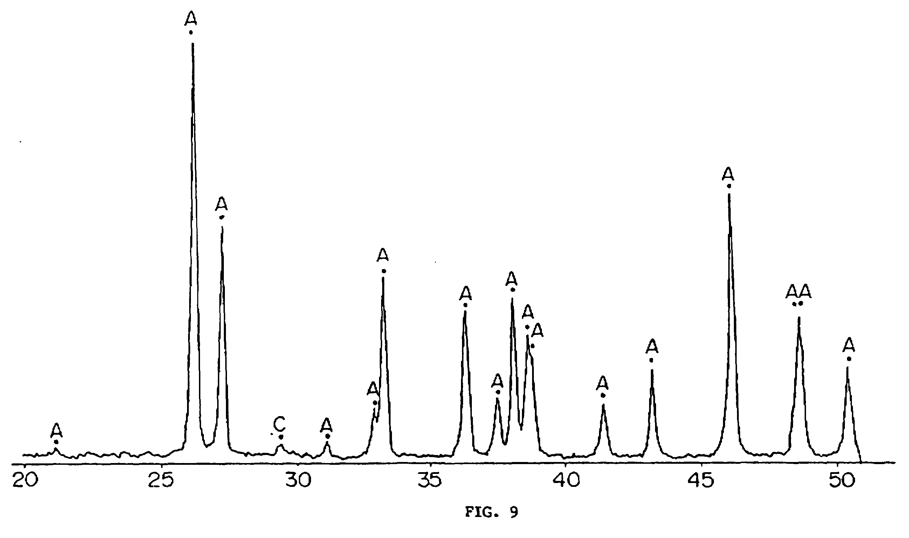

The SEM photograph of the Sample No. 2 is shown in Fig. 2. In the microphotograph, the full scale is 20 µm and a unit division is 2 µm. The X-ray diffraction pattern is shown in Fig. 9. Fig. 9 shows that the calcium carbonate particles of Sample No. 2 are mainly aragonite crystals.

### Example 3

To 2 liters of an aqueous calcium chloride solution (0.75 mol/l) at 80 - 85°C into which carbon dioxide gas was being blown at a rate of 1 l/min. under stirring, 1.5 moles of magnesium hydroxide was added at one time and the reaction was allowed to occur at the same temperature for 5 hours. By this operation, needle-shaped calcium carbonate particles were precipitated. The precipitated crystals were treated as in Example 1 to obtain needle-shaped calcium carbonate particles Sample No. 3.

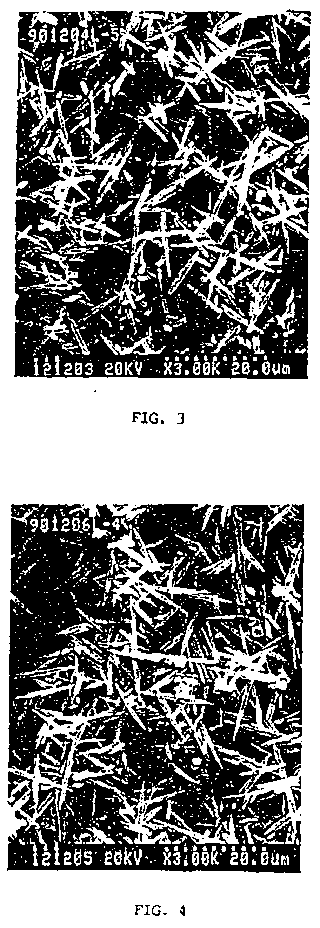

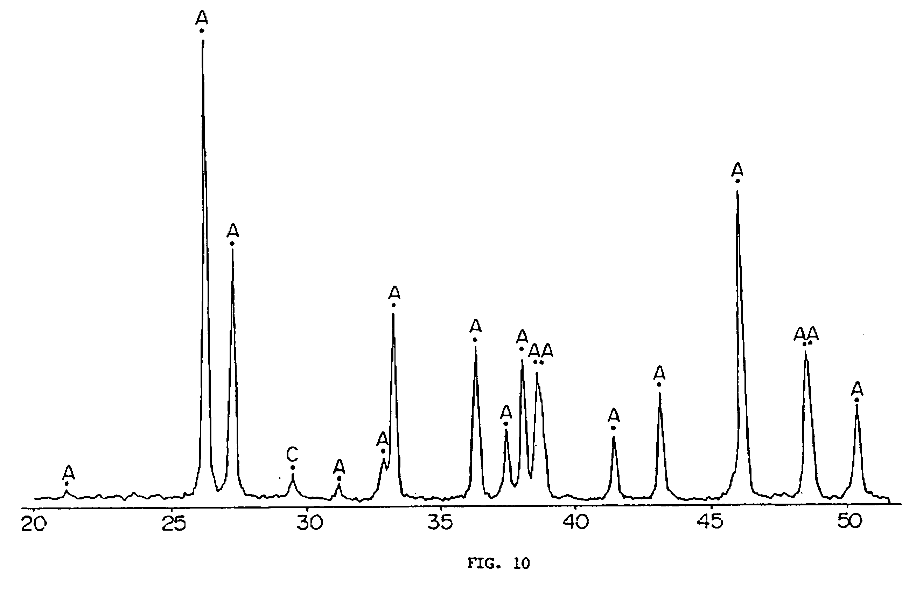

The SEM photograph of the Sample No. 3 is shown in Fig. 3. In the microphotograph, the full scale is 20 µm and a unit division is 2 µm. The X-ray diffraction pattern is shown in Fig. 10. Fig. 10 shows that the calcium carbonate particles of Sample No. 3 are mainly aragonite crystals.

### Example 4

To 2 liters of aqueous calcium chloride solution (0.5 mol/l) at 60 - 65°C into which carbon dioxide gas was being blown at a rate of 1 l/min. under stirring, 1 mole of magnesium hydroxide was added at one time and the reaction was allowed to occur at this temperature for 4 hours. By this operation, needle-shaped calcium carbonate particles were precipitated. The precipitated crystals were treated as in Example 1 to obtain needle-shaped calcium carbonate particles Sample No. 4.

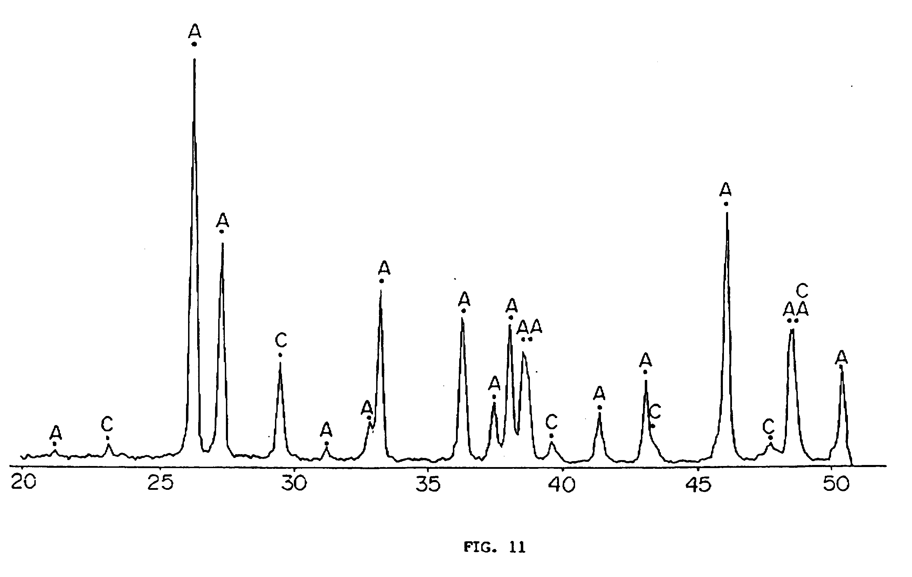

The SEM photograph of the sample No. 4 is shown in Fig. 4. In the microphotograph, the full scale is 20 µm and a unit division is 2 µm. The X-ray diffraction pattern is shown in Fig. 11. Fig. 11 shows that the calcium carbonate particles of Sample No. 4 are mainly aragonite crystals.

### Example 5

To 2 liters of an aqueous calcium chloride solution (0.5 mol/l) at 80 - 85°C into which carbon dioxide gas was being blown at a rate of 1 l/min. under stirring, 1/6 mole of magnesium hydroxide was added and the reaction was carried out at this temperature. One hour later, another 1/6 mole of magnesium hydroxide was added. Like this, at one hour interval, 1/6 mole each of magnesium hydroxide was added so that totally one mole of magnesium hydroxide was added. After 6 hours from the beginning of the reaction, the reaction was stopped and the precipitated calcium carbonate particles were treated as in Example 1 to obtain needle-shaped calcium carbonate particles Sample No. 5.

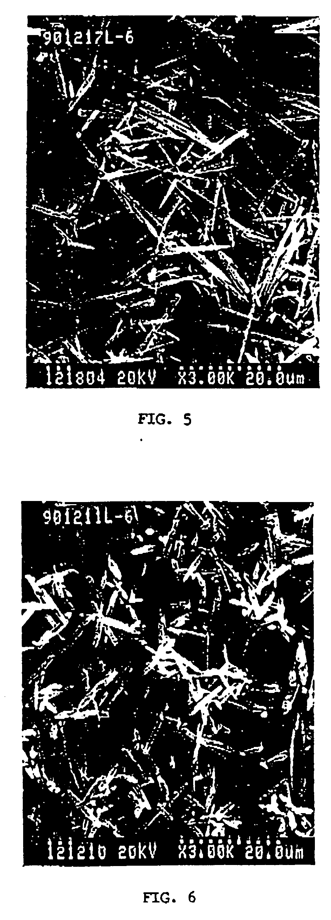

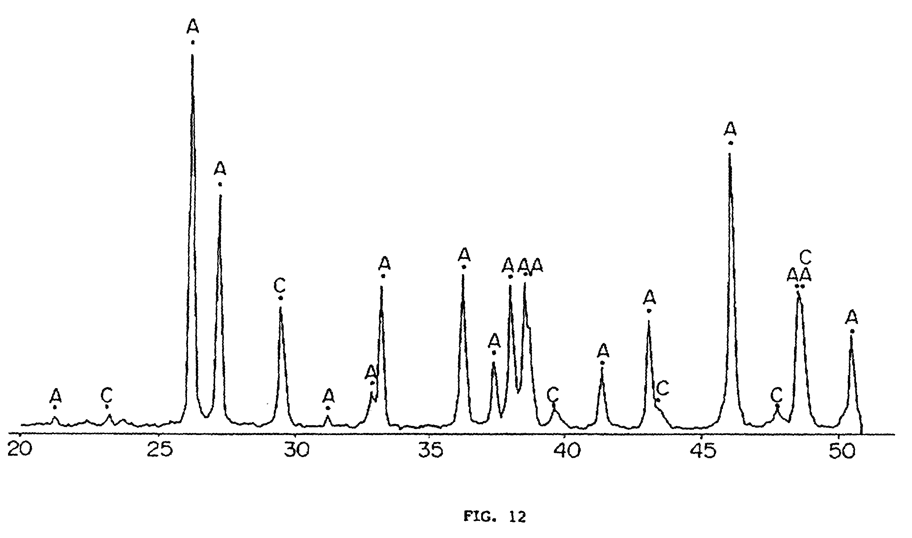

The SEM photograph of the Sample No. 5 is shown in Fig. 5. In the microphotograph, the full scale is 20 µm and a unit division is 2 µm. The X-ray diffraction pattern is shown in Fig. 12. Fig. 12 shows that the calcium carbonate particles of Sample No. 5 are mainly aragonite crystals.

### Example 6

To 2 liters of a magnesium hydroxide slurry (0.25 mol/l) at 80 - 85°C into which carbon dioxide gas was being blown at a rate of 1 l/min. under stirring, 1/12 mole of calcium chloride was added and the reaction was carried out at this temperature. One hour later, another 1/12 mole of magnesium hydroxide was added. Like this, at one hour interval, 1/12 mole each of calcium chloride was added so that totally 0.5 mole of calcium chloride was added. After 6 hours from the beginning of the reaction, the reaction was stopped and the precipitated calcium carbonate particles were treated as in Example 1 to obtain needle-shaped calcium carbonate particles Sample No. 6.

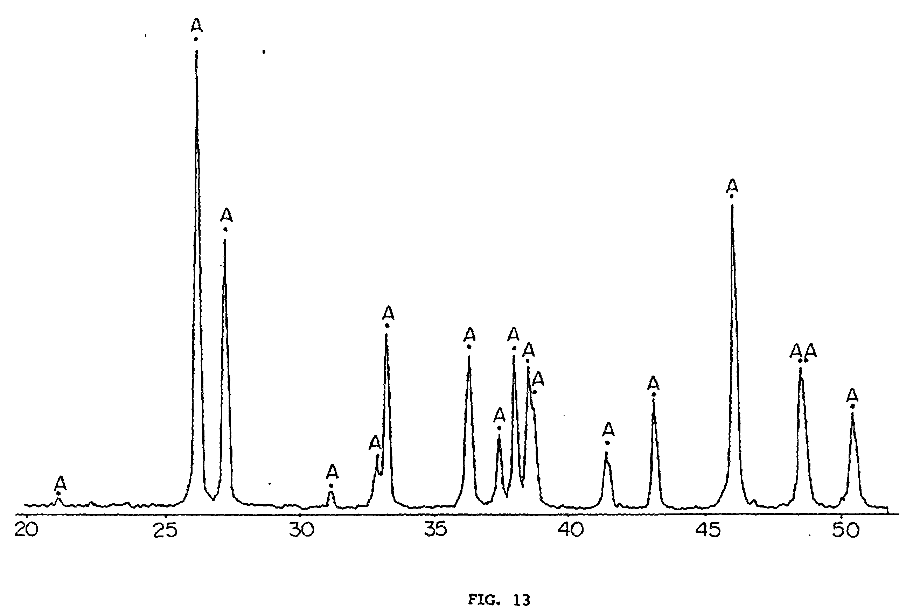

The SEM photograph of the Sample No. 6 is shown in Fig. 6. In the microphotograph, the full scale is 20 µm and a unit division is 2 µm. The X-ray diffraction pattern is shown in Fig. 13. Fig. 13 shows that the calcium carbonate particles of Sample No. 6 are mainly aragonite crystals.

### Example 7

To 2 liters of a magnesium chloride solution (0.37 mol/l), 0.5 mole of calcium hydroxide was added at one time and the mixture was heated to 80 - 85°C. Under this temperature, carbon dioxide gas was blown at a rate of 0.1 l/min. under stirring for 6 hours. By this operation, needle-shaped calcium carbonate particles were precipitated. The precipitated crystals were treated as in Example 1 to obtain needle-shaped calcium carbonate particles Sample No. 7.

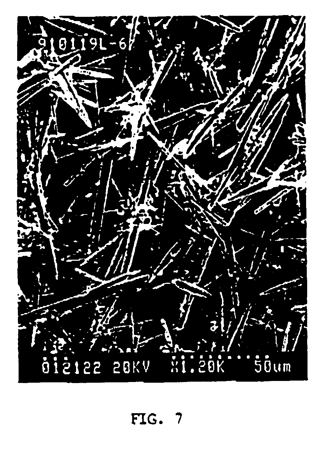

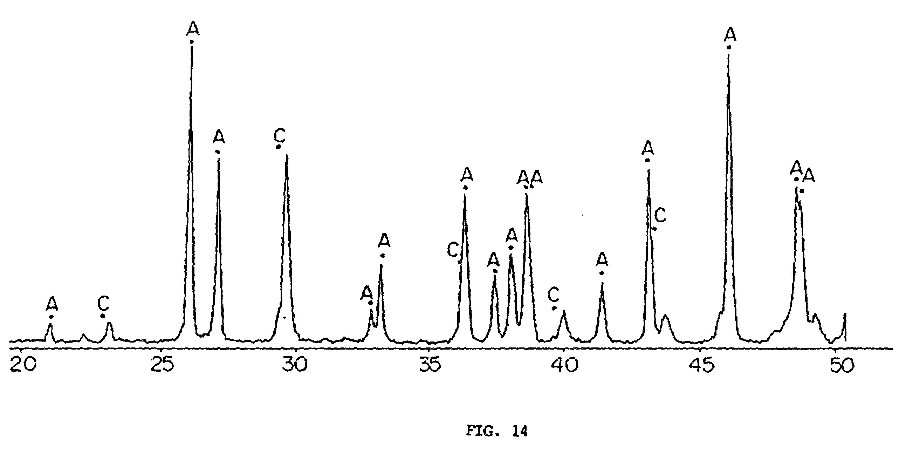

The SEM photograph of the Sample No. 7 is shown in Fig. 7. In the microphotograph, the full scale is 50 µm and a unit division is 5 µm. The X-ray diffraction pattern is shown in Fig. 14. Fig. 14 shows that the calcium carbonate particles of Sample No. 7 are mainly aragonite crystals.

### Example 8

About 2.1 kg of calcium oxide was added to 10 liters of water at about 50°C so as to form calcium hydroxide slurry. The resulting slurry was added to about 120 liters of water at 50°C in a reaction vessel. The resulting mixture was stirred with a high speed emulsifying and dispersing machine at 50°C for 1 hour. To the resulting mixture, an aqueous magnesium chloride solution prepared by dissolving about 11.7 kg of magnesium chloride hexahydrate in 20 liters of water was added. The resulting mixture was stirred with a high speed emulsifying and dispersing machine while heating the mixture. When the temperature of the mixture reached to 80°C, a gas containing 25% by volume of carbon dioxide was blown into the mixture under stirring at a rate of 12 l/min. for 6 hours and then at a rate of 80 l/min. for another 0.5 hour (totally 6.5 hours) to obtain needle-shaped calcium carbonate particles. The precipitated crystals were treated as in Example 1 to obtain needle-shaped calcium carbonate particles Sample No. 8.

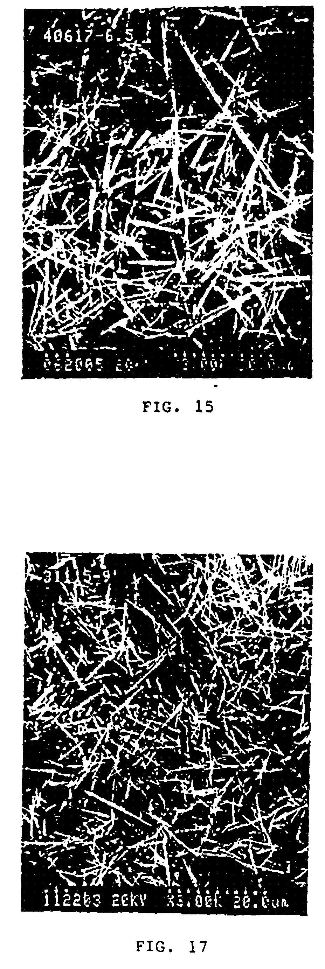

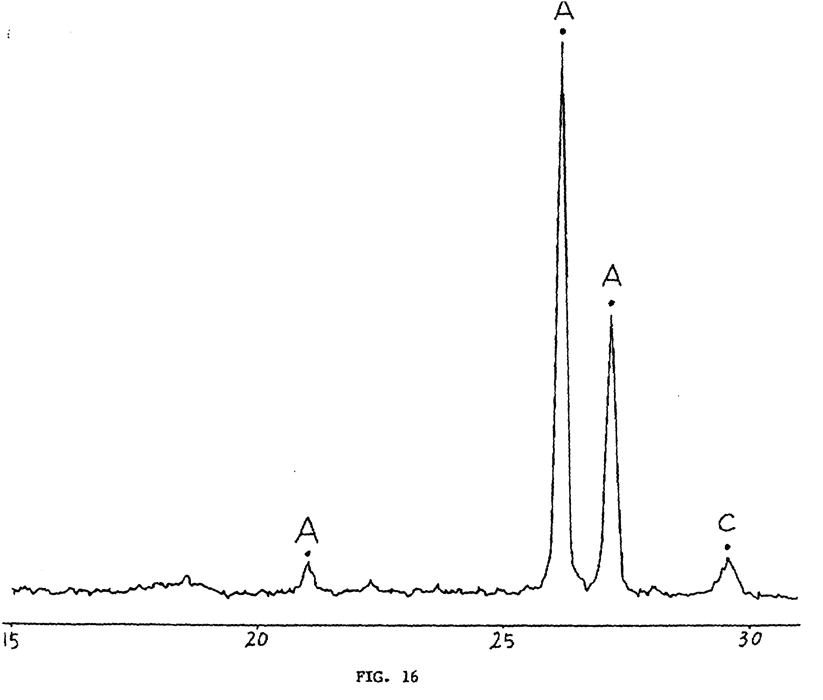

The SEM photograph of the Sample No. 8 is shown in Fig. 15. In the microphotograph, the full scale is 20 µm and a unit division is 2 µm. The X-ray diffraction pattern is shown in Fig. 16. Fig. 16 shows that the calcium carbonate particles of Sample No. 8 are mainly aragonite crystals.

### Example 9

To 300 liters of aqueous magnesium chloride solution (0.325 mol/l), 75 moles of calcium hydroxide was added at one time. The resulting mixture was stirred with a high speed emulsifying and dispersing machine while heating the mixture. When the temperature of the mixture reached to 80°C, a gas containing 25% by volume of carbon dioxide was blown into the mixture under stirring at a rate of 16 l/min. for 6 hours and then at a rate of 80 l/min. for another 3 hours (totally 9 hours) to obtain needle-shaped calcium carbonate particles. The precipitated crystals were treated as in Example 1 to obtain needle-shaped calcium carbonate particles Sample No. 9.

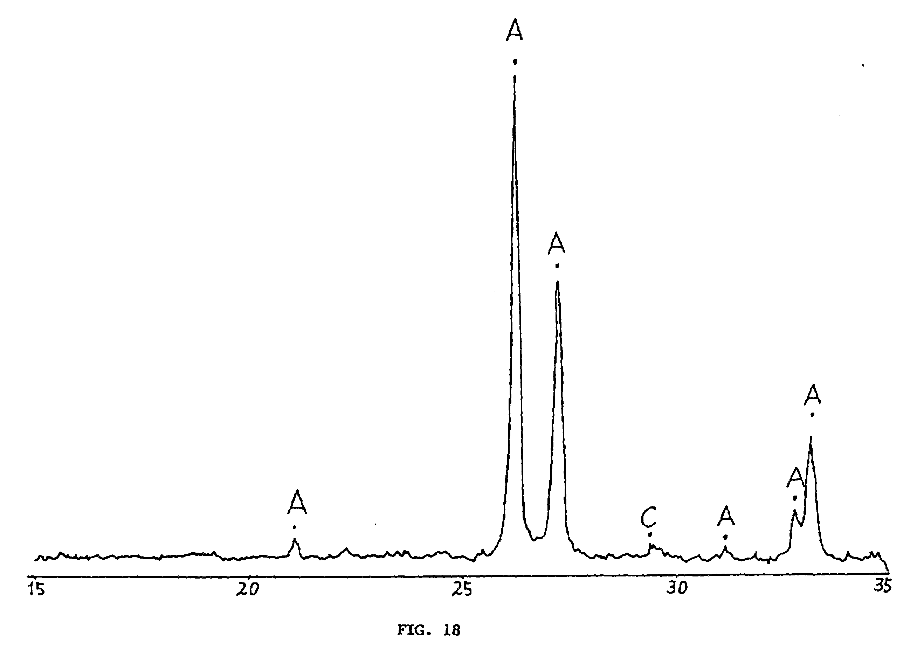

The SEM photograph of the Sample No. 9 is shown in Fig. 17. In the microphotograph, the full scale is 20 µm and a unit division is 2 µm. The X-ray diffraction pattern is shown in Fig. 18. Fig. 18 shows that the calcium carbonate particles of Sample No. 9 are mainly aragonite crystals.

## Claims

1. A process for producing needle-shaped aragonite-based calcium carbonate particles comprising the carbonation with carbon dioxide gas at a temperature not lower than 60° C of an aqueous solution to which calcium chloride is added, characerized in that magnesium hydroxide is added to the aqueous solution.

2. The process of claim 1, wherein said magnesium hydroxide is added to an aqueous solution of calcium chloride into which carbon dioxide gas is being blown.

3. The process of claim 1, wherein said calcium chloride is added to a magnesium hydroxide slurry into which carbon dioxide gas is being blown.

4. The process of claim 1, wherein said aqueous solution is prepared by adding calcium hydroxide to an aqueous magnesium chloride solution.

## Patentansprüche

1. Verfahren zur Herstellung nadelförmiger, auf Aragonit basierender Calciumcarbonatteilchen, enthaltend die Carbonisierung einer wäßrigen Lösung, zu der Calciumchlorid zugegeben ist, mit Kohlendioxidgas bei einer Temperatur nicht unter 60°C,
**dadurch gekennzeichnet, daß**
der wäßrigen Lösung Magnesiumhydroxid zugegeben wird.

2. Verfahren nach Anspruch 1, worin das Magnesiumhydroxid einer wäßrigen Lösung von Calciumchlorid, in die Kohlendioxidgas eingeblasen wird, zugegeben wird.

3. Verfahren nach Anspruch 1, worin das Calciumchlorid zu einer Magnesiumhydroxidaufschlämmung, in die Kohlendioxidgas eingeblasen wird, zugegeben wird.

4. Verfahren nach Anspruch 1, worin die wäßrige Lösung durch Zugabe von Calciumhydroxid in eine wäßrige Magnesiumchloridlösung hergestellt wird.

## Revendications

1. Procédé de production de particules aciculaires de carbonate de calcium à base d'aragonite, comportant le fait de carbonater, avec du gaz carbonique et à une température d'au moins 60°C, une solution aqueuse à laquelle est ajouté du chlorure de calcium, caractérisé en ce que de l'hydroxyde de magnésium est ajouté à cette solution aqueuse.

2. Procédé conforme à la revendication 1, dans lequel on ajoute de l'hydroxyde de magnésium à une solution aqueuse de chlorure de calcium où l'on fait barboter du gaz carbonique.

3. Procédé conforme à la revendication 1, dans lequel on ajoute du chlorure de calcium à une suspension d'hydroxyde de magnésium où l'on fait barboter du gaz carbonique.

4. Procédé conforme à la revendication 1, dans lequel on prépare ladite solution aqueuse en ajoutant de l'hydroxyde de calcium à une solution aqueuse de chlorure de magnésium.
